# EUROPEAN PATENT SPECIFICATION

(11) **EP 3 251 889 B1**
(45) Date of publication and mention of the grant of the patent: **07.08.2019**
(21) Application number: 16172813.4
(22) Date of filing: 03.06.2016
(51) Int. Cl.: B60N 2/90, B60N 2/00, B60N 2/02

(54) **SITTING POSITION ADJUSTMENT SYSTEM**
SITZPOSITIONANPASSUNGSSYSTEM
SYSTÈME DE RÉGLAGE DE POSITION D'ASSISE

(43) Date of publication of application: 06.12.2017
(73) Proprietor: Volvo Car Corporation, 40531 Göteborg (SE)
(72) Inventor: Magnusson, M Klara, 41766 Göteborg (SE); Moric, M Azra, 41129 Göteborg (SE)
(74) Representative: Valea AB

(56) References cited:
- US-A- 4 944 554
- US-A1- 2012 086 249
- US-A1- 2015 366 350

## Description

### TECHNICAL FIELD

The present disclosure relates to a sitting position adjustment system. The disclosure further relates to a seat, e.g. a vehicle seat, comprising and/or being provided with the sitting position adjustment system and to a method for adjusting a sitting position of a user of a seat.

### BACKGROUND

From the driver's seat to the office chair and then to the couch at home, people are spending more time sitting than ever. Research studies have shown that sitting may influence our bodies and our health negatively. However, we cannot prevent sitting. It is therefore desirable to minimize, or preferably to avoid, its negative effects. A seat should desirably be comfortable to all body shapes and sizes and preferably help the user of the seat to improve his/her health. People of different body weights and builds distribute their weight on a seat in corresponding patterns, but pressure intensity varies from person to person. Surface pressure can cause discomfort while sitting. Correct pressure distribution is closely related to sitting comfort.

Systems for determining pressure distribution are well known to the skilled person. An example is given in patent document US 2016018274 A1, which discloses a textile pressure sensor for the capacitive measuring of a pressure distribution of objects of any shape, in particular body parts.

Document JP 2011-164825 A discloses a driving state determination apparatus which can suitably determine a driver's awakening state by detecting pressure distribution applied to a driver's seat during driving.

Document US 2015/366350 A1 relates to a posture adjustment system, which includes a set of sensors coupled to a chair on which a person may sit. The posture adjustment system gathers data from the set of sensors and generates a posture model that reflects a posture associated with the seated person. The posture adjustment system then determines corrections to the posture of the person that could, potentially, improve their posture. The posture adjustment system then indicates those corrections to the person, or, alternatively, applies a set of adjustments to the chair to cause the person to assume a new posture that reflects the posture corrections.

Document US 2012/0086249 A1 relates to equipment and processes adapted to generate a seating solution by obtaining occupant data, calculating body dimensions from the occupant data, and calculating a best-fit body arrangement for an occupant. Occupant data may be obtained in various ways using available computational devices and software or by manually measuring the relevant dimensions on the occupant. A user interface for inputting occupant metrics and/or occupant measurements may be provided in a mobile terminal included in the vehicle or separate from the vehicle, thus giving users increased flexibility while maximizing simplicity and usability for the user or other personnel obtaining the data. Once an occupant's best-fit body arrangement is determined, it may be altered by changing the predetermined criteria to achieve optimum comfort, safety, and therapeutic benefit as well as used for providing improved comfort on a continuous basis and/or in response to detected or predicted vehicle, road, or atmospheric conditions.

### SUMMARY

The object of the present disclosure is to overcome or ameliorate at least one of the disadvantages of the prior art, or to provide a useful alternative.

The object above may be achieved by the subject-matter of claim 1. Embodiments are set forth in the appended dependent claims, in the following description and in the drawings.

Thus, according to the present invention there is provided a sitting position adjustment system for adjusting a sitting position of a user of a seat according to claim 1. The sitting position adjustment system comprises a pressure distribution determination system for determining a pressure distribution of the user in the seat. The sitting position adjustment system also comprises a micro-adjustment system for making micro-adjustments of a sitting surface of the seat based on the determined pressure distribution.

Systems for determining pressure distribution are well known to the skilled person. The systems may comprise pressure-sensitive textiles and/or responsive sensors in the seat to determine small differences in pressure distribution. The determined pressure distribution may be represented by a pressure mapping, e.g. as a two-dimensional diagram, wherein the local pressure is represented by different colours and/or colour intensities. The resolution of the pressure distribution depends on the kind of sensor. The pressure distribution determination system may be configured to determine the pressure distribution at a predefined time interval, e.g. once a second, or the pressure distribution may be determined continuously or substantially continuously. The pressure distribution may be determined for a portion of, preferably a major portion of, or more preferably the whole of the sitting surface.

The term sitting position as used herein not only covers that the user of the seat may sit in the seat but also that the user of the seat may lie down in the seat. Correspondingly, the term seat comprises seats suitable for sitting and/or lying. The seat may be a vehicle seat, such as a driver's seat, a seat for a front passenger or a back seat. The seat may thus be located in a vehicle, such as a car, bus, truck or lorry. The seat may also be located in a vessel, tram, train or an aeroplane. The seat may comprise a squab and a backrest, the pressure distribution may then be determined for the squab and/or the backrest. In that case the sitting surface comprises the surface of the squab and/or the backrest being intended for contact with a sitting person. In addition, a headrest may be comprised in the seat. Further, for some seats, the squab and the backrest together form a single unit.

The micro-adjustment system is configured to be able to adjust the sitting position of the user by means of adjusting the sitting surface of the seat. It is thereby the position of the user in the seat, which is adjusted. On the other hand, the sitting position adjustment system disclosed herein is not configured to influence a position of the seat itself, e.g. in relation to a vehicle interior. As a comparison, the micro-adjustment system operates in the millimetre range and/or the submillimetre range, while a system for adjusting the position of the seat itself works in the centimetre range. The displacements of the seat in order to adjust its position are thus at least three times, five times or ten times as large as the micro-adjustments of the sitting surface. Hence, it is acceptable to perform micro-adjustments during driving of a vehicle, while it could be unsuitable from a safety point of view to adjust the position of the seat itself during driving.

Further, when adjusting the position of the seat itself, the seat may be displaced forwards or backwards in the longitudinal direction of the vehicle, i.e. a one-directional longitudinal translation displacement, and/or the angle of a squab or the backrest may be altered, i.e. a pivotal displacement. These kinds of displacements differ from the micro-adjustments of the sitting surface, which typically are perpendicular or substantially perpendicular in relation to the sitting surface of the seat. The micro-adjustments may e.g. be a pulsating displacement of the sitting surface. The micro-adjustment system is adapted to interact with the body part of the user, which is in contact with the sitting surface of the seat. The micro-adjustment system is located at or in the sitting surface, such that the micro-adjustment system can interact with the user of the seat.

As a complement to the micro-adjustment system, the sitting position adjustment system may comprise a prompting system for prompting the user to adjust sitting position based on the determined pressure distribution. The prompting system may inform, alert and/or warn the user that it is time to change sitting position, such that the user can change the sitting position himself/herself. The prompting system may comprise, be comprised in or consist of, any one of the feedback systems described below.

The sitting position adjustment system will help the user to adjust the pressure distribution at/in the sitting surface of the seat. Thereby it may be avoided that the user sits for too long time in the same position. Hence, the sitting position adjustment system will help to provide dynamic support to the user during sitting. The system may also help the user to avoid sitting in positions, which are unsuitable from an ergonomic point of view and/or from a safety point of view. The system may also be used to identify a user of the seat based on the determined pressure distribution, which is further described below.

The determined pressure distribution may be used to find out if there is a spot of locally high pressure, which may indicate that the user of the seat sits in an unsuitable way. Thereby the absolute values of the pressure distribution may be used. The absolute values are the determined values given in a pressure unit, such as N/m². Purely as an example, micro-adjustments of the sitting surface and/or prompting the user may be performed if the pressure locally exceeds a threshold value, which may be predefined. The threshold value may e.g. be set on an individual basis related to the user.

The sitting position adjustment system may further comprise a memory, for storing one or more pressure distributions, and a comparison unit, for comparison of the determined pressure distribution with at least one of the one or more stored pressure distributions, wherein the micro-adjustment system is adapted to make micro-adjustments of the sitting surface of the seat based on the comparison and/or the prompting system is adapted to prompt the user based on the comparison. The memory may be integrated with the pressure distribution determination system such that they form one common unit or arranged adjacent to it, e.g. in the seat. However, it is also possible that the memory forms a separate unit. The memory may be located external of the seat, e.g. comprised in an infotainment system or in an application in a mobile electronic device, such as a smartphone, smart watch or a tablet computer, and communicating, preferably wirelessly, with the parts of the sitting position adjustment system located in the seat. The mobile electronic device may be docked in the seat or in the vehicle, wherein the seat is located. The sitting position adjustment system may hence comprise a docking station. The memory may also form part of the "cloud", e.g. be located at an external server.

The one or more stored pressure distributions may comprise at least one pressure distribution representing a suitable sitting position. The sitting position may be suitable from an ergonomic point of view and/or from a safety point of view. As an alternative or a complement, the one or more stored pressure distributions may comprise one or more previously determined pressure distributions of that user. Then a newly determined pressure distribution can be compared to a previously determined pressure distribution. This may be used to help the user to avoid sitting for too long time in the same position, which is known to be unsuitable from an ergonomic point of view.

The memory comprises one or more stored pressure distributions. The pressure distribution may be stored together with time information about when that pressure distribution was determined.

The memory may be adapted to in addition comprise user identity data associated with at least one of the one or more stored pressure distributions. The user identity data comprises information identifying the user. It may also comprise data related to that user, e.g. weight of the user.

By utilizing the stored user identity data, it is possible for the sitting position adjustment system to identify a user of the seat by the comparison unit comparing the determined pressure distribution with the at least one of the one or more stored pressure distributions having an associated user identity data. The person is in that case identified by the pressure distribution he or she makes in the seat. Purely as an example, the area of the applied pressure and/or the relative local distribution of the pressure may be typical for the person. The pressure distribution of the individual can then be regarded as a bottom-print of the user, corresponding to identification made by finger-prints. As an option, data from a weight sensor provided in the seat may be used in addition.

Such user identification by means of the pressure distribution can be useful as part of a theft protection system in order to see if a person sitting in the seat is authorized to drive the vehicle, e.g. stopping unauthorized drivers from driving off with that vehicle. User identification is also useful as input for many other systems of the vehicle for making personalized settings of e.g. seat, mirrors, infotainment system, driving mode. Such other systems may be related to safety and/or comfort. Further, this kind of user identification may be used to determine number of occupants in a vehicle, if the seats are provided with the sitting position adjustment system as described herein.

Moreover, user identification by means of the determined pressure distribution may be performed independently of the micro-adjustment system and/or the prompting system, i.e. it would be enough for user identification to have a system comprising the above-mentioned pressure distribution determination system, memory and comparison unit.

The sitting position adjustment system may comprise a separate user identification system adapted to identify a user of the seat. The separate user identification system may comprise an image-based system, such as a camera. As an alternative or a complement, the separate user identification system may comprise a user interface to enter a PIN code, a password or a key. As yet an alternative or a complement, the user may be identified by means of a key fob.

In case the user has been identified, e.g. in any of the ways described herein, a subset of the one or more stored pressure distributions may be used in the comparison, the subset being selected based on the identified user.

The data of the identified user may further be used to associate that user to a determined pressure distribution, such that that pressure distribution may be stored associated with that user. This may then be used as input for the above-mentioned user identification by means of the determined pressure distribution.

The sitting position adjustment system may comprise a feedback system adapted to provide feedback to the user based on the determined pressure distribution. The feedback may be based on absolute values of the determined pressure distribution and/or based on the comparison of the determined pressure distribution with the at least one of the one or more stored pressure distributions. The feedback system may be adapted to inform the user, such that the user understands what the micro-adjustment system does. The feedback system may be used as the prompting system, i.e. trying to make the user adjust sitting position.

The feedback system may be adapted to give real-time feedback, e.g. if the pressure distribution is determined continuously or substantially continuously.

The feedback system may be a haptic feedback system, e.g. comprised in the seat, possibly combined with the micro-adjustment system. The haptic feedback may comprise vibrations, e.g. of the seat, steering wheel, gear shift or headrest, in order to alert the user of the seat. If in the seat, the micro-adjustment system may be utilized to provide the vibrations. The haptic feedback may as an alternative or a complement comprise giving the user of the seat a material feeling, e.g. that the sitting surface is soft or hard. If in the seat, the micro-adjustment system may provide the material feeling. A change in the material feeling may indicate that it would be good to change sitting position. The haptic feedback may thus be given by means of the micro-adjustment system.

As an alternative or a complement, the feedback system may be a visual and/or audial feedback system, which may be comprised in an infotainment system or in an application in a mobile electronic device, such as a smartphone, smart watch or a tablet computer. The mobile electronic device may e.g. be wirelessly connected, such as by means of wifi and/or Bluetooth, or variants or successors thereof. The mobile electronic device may be docked in the seat or in the vehicle, wherein the seat is located. The sitting position adjustment system may hence comprise a docking station. A visual and/or audial feedback system is/are suitable to be used as the prompting system and can help to guide the user towards a suitable sitting position.

Visual feedback may be displayed in the infotainment system, in the connected mobile electronic device discussed above, on an instrument panel and/or projected on a windscreen. The visual feedback system may be used to display a pressure mapping, in which different colours represent different pressure ranges. Purely as an example, a red colour may be used to alert the user of the seat that the pressure is locally above a threshold value, which may be predefined and possibly related to an identified user. As an alternative or a complement, the visual feedback system may e.g. be utilized to display a difference image between the determined pressure distribution and the pressure distribution of a suitable sitting position, i.e. a representation of a comparison. The difference image may be able shift colour, such that the user can see if he/she is coming closer to the suitable sitting position, when adjusting his/her sitting position.

The audial feedback system may be used to prompt the user of the seat, e.g. by a voice message or a signal, that the sitting position should be changed.

The sitting position adjustment system may further comprise a massage system adapted to provide massage to the user, e.g. by means of the micro-adjustment system, preferably the massage being based on the determined pressure distribution. The massage, e.g. its location and intensity, may be based on absolute values of the determined pressure distribution and/or based on the comparison of the determined pressure distribution with the at least one of the one or more stored pressure distributions. If the sitting position adjustment system is located in the driver's seat, the massage system may be configured not to provide massage, when the vehicle is in motion and/or during a driving situation considered to be driver intense. Providing massage during a driving situation considered monotonous may however be suitable. The massage system may be configured such that the user may start the massage, e.g. after having been asked by the system if it is wanted. As an alternative, or a complement, the user may be able to preselect that it is acceptable that massage starts automatically based on the determined pressure distribution. The massage system may be comprised in the seat. If the user has been identified, e.g. in any of the ways described herein, the massage may be provided on a personalized basis. The massage may then be based on a combination of that person's historic data about pressure distributions with the presently determined pressure distribution. The historic data may be retrieved from the memory, from an application in a mobile electronic device, such as a smartphone, smart watch or a tablet computer, and/or from the "cloud", e.g. from an external server.

The sitting position adjustment system may be configured to communicate data related to the user and/or determined pressure distributions to and from external devices, e.g. from wearable technologies, such as smart clothes or a smart watch worn by the user of the seat, or from a mobile electronic device, such as a smartphone, smart watch or a tablet computer and/or from a wirelessly retrievable user profile. Such data may be related to the health and physical status of the user, and may comprise data about pulse, weight and/or body temperature. The data may comprise information about sitting positions of the user from other places than the seat comprising the sitting position adjustment system described herein, e.g. from the sitting position in an office chair.

Data from the determined pressure distributions and about the user may be used for future development of the seat. Such data may then be accessible, optionally with the user data anonymized, by seat manufactures, vehicle manufactures, researchers etc.

The present invention is further related to a seat comprising and/or being provided with a sitting position adjustment system as described herein. The sitting position adjustment system may be comprised in the seat. Alternatively, the sitting position adjustment system may be a separate system, e.g. comprised in a fabric draped over the seat. As yet an alternative, the sitting position adjustment system may be comprised in an item worn or carried by the user of the seat, e.g. comprised in clothes of the user. The seat may be a vehicle seat, such as a driver's seat, a seat of a front passenger or a back seat. The seat may thus be located in a vehicle, such as a car, bus, truck or lorry. The seat may also be located in a vessel, tram, train or an aeroplane. As mentioned above, the term seat comprises seats suitable for sitting and/or lying.

The present invention is also related to a vehicle comprising the sitting position adjustment system as described herein or the seat as described herein. The present invention is further related to a use of a sitting position adjustment system as described herein in a vehicle for adjusting a sitting position of a user of a vehicle seat.

The present invention is also related to a method according to claim 9 for adjusting a sitting position of a user of a seat. The method comprises
- *determining a pressure distribution* of the user in the seat,
- *making micro-adjustments* of a sitting surface of the seat based on the determined pressure distribution.

The method may further comprise
- *prompting* the user to adjust sitting position based on the determined pressure distribution.

The step of *determining a pressure distribution* may be performed by means of the pressure distribution determination system described herein. The step of *prompting* the user to adjust sitting position may be performed by means of the prompting system described herein. The step of *making micro-adjustments* may be performed by the micro-adjustment system described herein.

The method may further comprise
- *storing* one or more pressure distributions,
- *comparing* by means of a comparison unit the determined pressure distribution with at least one of the one or more stored pressure distributions,
wherein the step of *prompting* and/or *making micro-adjustments* mentioned above is based on the comparison.

The one or more pressure distributions may be stored in a memory as described herein.

As described herein, the step of *prompting* and/or the step of *making micro-adjustments* may, as an alternative or a complement, be based on absolute values of the determined pressure distribution.

The method may further comprise
- *associating* user identity data with at least one of the one or more stored pressure distributions,
- *identifying a user* of the seat, by means of the step of *comparing* comprising comparing the determined pressure distribution with at least one of the one or more stored pressure distributions having an associated user identity data.

Corresponding to as for the system, as mentioned above, user identification by means of the determined pressure distribution may be performed independently of the step of *prompting* and/or the step of *making micro-adjustments.* Such a method for user identification may then comprise the steps of:
- *determining a pressure distribution* of the user in the seat,
- *storing* one or more pressure distributions,
- *associating* user identity data with at least one of the one or more stored pressure distributions,
- *identifying a user* of the seat by *comparing* the determined pressure distribution with at least one of the one or more stored pressure distributions having an associated user identity data.

The method may further comprise
- *identifying a user* of the seat with a separate user identification system and/or with the method for user identification described herein, which utilizes the determined pressure distribution compared to the one or more stored pressure distributions having an associated user identity data,
- *selecting a subset* of the one or more stored pressure distributions based on the identified user,
wherein the step of comparing comprises comparing the determined pressure distribution with the at least one of the subset of the one or more stored pressure distributions.

The step of *comparing* may comprise determining if the determined pressure distribution has been the same for a predetermined period of time and/or determining if the determined pressure distribution is related to an unsuitable sitting position. The sitting position may e.g. be unsuitable from an ergonomic point of view and/or from a safety point of view.

The step of *prompting* may comprise *providing haptic, visual and*/*or audial feedback* to the user with a haptic, visual and/or audial feedback system, wherein the feedback is based on the determined pressure distribution. The feedback may be based on absolute values of the determined pressure distribution and/or based on the comparison of the determined pressure distribution with the at least one of the one or more stored pressure distributions.

The method may further comprise
- *providing,* based on the determined pressure distribution one or more pre-stored *exercise suggestions* to the user by means of the visual and/or audial feedback system. The exercise suggestions may be suitable to be performed while the user sits in the seat or they may be performed after the user has left the seat. The exercise suggestions may be displayed by the visual feedback system and/or may be transmitted by the audial feedback system, e.g. as voice messages.

The method may further comprise
- *providing massage* to the user by means of a massage system comprised in the seat by making micro-adjustments of the sitting surface of the seat, preferably the massage being based on the determined pressure distribution.

The massage may be based on absolute values of the determined pressure distribution and/or based on the comparison of the determined pressure distribution with the at least one of the one or more stored pressure distributions. The massage may be performed by means of the micro-adjustment system. The massage system is further described above.

### BRIEF DESCRIPTION OF THE DRAWINGS

The present invention will hereinafter be further explained by means of non-limiting examples with reference to the appended drawings wherein:
Fig. 1 is a schematic view of a sitting position adjustment system according to the invention.
Fig. 2 illustrates visual feedback systems.
Figs. 3a and 3b illustrate pressure mappings.
Fig. 4 is a schematic view of a method for adjusting a sitting position of a user of a seat according to the invention.

It should be noted that the appended drawings are not necessarily drawn to scale and that the dimensions of some features of the present invention may have been exaggerated for the sake of clarity.

### DETAILED DESCRIPTION

The invention will, in the following, be exemplified by embodiments. It should however be realized that the embodiments are included in order to explain principles of the invention and not to limit the scope of the invention, as defined by the appended claims. Details from two or more of the embodiments may be combined with each other.

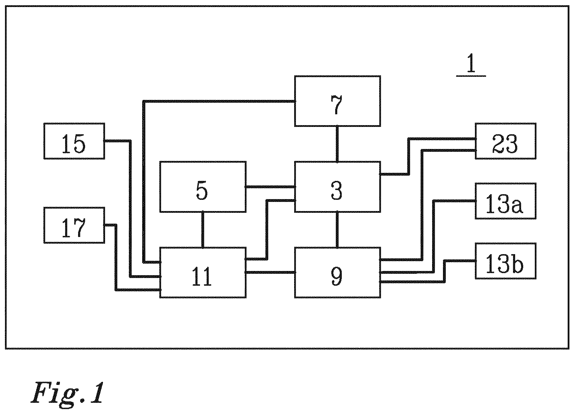

Figure 1 illustrates a sitting position adjustment system 1 according to the invention. The sitting position adjustment system 1 comprises a pressure distribution determination system 3 for determining a pressure distribution of the user in the seat. The sitting position adjustment system 1 further comprises a micro-adjustment system 5 for making micro-adjustments of a sitting surface of the seat based on the determined pressure distribution, and/or a prompting system 7 for prompting the user to adjust sitting position based on the determined pressure distribution. The pressure distribution determination system 3 and the micro-adjustment system 5 may e.g. be located in a vehicle seat.

In the illustrated embodiment, the sitting position adjustment system 1 further comprises a memory 9 for storing one or more pressure distributions, and a comparison unit 11 for comparison of the determined pressure distribution with at least one of the one or more stored pressure distributions, wherein the micro-adjustment system 5 is adapted to make micro-adjustments of the sitting surface of the seat based on the comparison and/or the prompting system 7 is adapted to prompt the user based on the comparison.

The memory 9 may form a common unit together with the pressure distribution determination system 3 or be arranged adjacent to it, e.g. in the seat. However, it is also possible that the memory 9 forms a separate unit. The memory may be located external of the seat, e.g. comprised in an infotainment system or in an application in a mobile electronic device, such as a smartphone, smart watch or a tablet computer, and communicating, preferably wirelessly, with the parts of the sitting position adjustment system located in the seat. The sitting position adjustment system 1 may hence comprise a docking station. The memory may also form part of the "cloud", e.g. be located at an external server.

The memory 9 comprises one or more stored pressure distributions. The pressure distribution may be stored together with time information about when that pressure distribution was determined. The memory 9 may be adapted to in addition comprise user identity data associated with at least one of the one or more stored pressure distributions.

As an option, the sitting position adjustment system 1 may comprise a separate user identification system adapted to identify a user of the seat. The separate user identification system may comprise an image-based system, such as a camera 13a. As an alternative or a complement, the user identification system may comprise a user interface 13b to enter a PIN code, a password or a key. As yet an alternative or a complement, the user may be identified by means of a key fob.

In the illustrated embodiment, the sitting position adjustment system 1 comprises a feedback system adapted to provide feedback to the user based on the determined pressure distribution. The feedback may be based on absolute values of the determined pressure distribution and/or based on the comparison of the determined pressure distribution with the at least one of the one or more stored pressure distributions. The feedback system may be adapted to inform the user, such that the user understands what the micro-adjustment system does. The feedback system may also be used as the prompting system 7, i.e. trying to make the user adjust sitting position himself/herself. The feedback system may be adapted to give real-time feedback, e.g. if the pressure distribution is determined continuously or substantially continuously.

The feedback system may be a haptic feedback system 15, e.g. comprised in the seat, possibly combined with the micro-adjustment system 5. The haptic feedback may comprise vibrations, e.g. of the seat, steering wheel, gear shift or headrest. If in the seat, the micro-adjustment system 5 may be utilized provide the vibrations. The haptic feedback may as an alternative or a complement comprise giving the user of the seat a material feeling, e.g. that the sitting surface is soft or hard. If in the seat, the micro-adjustment system may provide the material feeling.

As an alternative or a complement, the feedback system may be a visual and/or audial feedback system, which may be comprised in an infotainment system or in an application in a mobile electronic device, such as a smartphone, smart watch or a tablet computer. The mobile electronic device may be docked in the seat or in a vehicle, wherein the seat is located. The sitting position adjustment system may hence comprise a docking station.

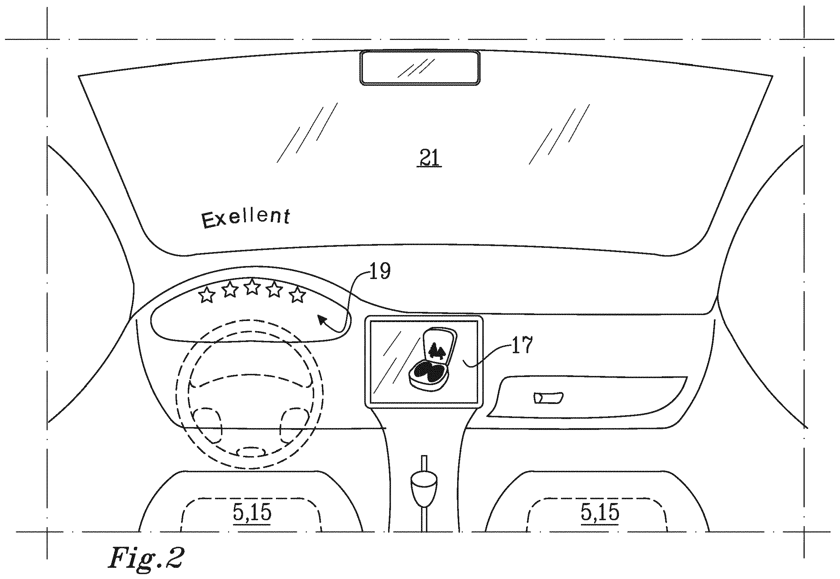

Visual feedback may be displayed in the infotainment system 17, on an instrument panel 19, projected on a windscreen 21, see Figure 2, and/or displayed in a mobile electronic device, such as a smartphone, smart watch or a tablet computer. The audial feedback system, e.g. forming part of the infotainment system 17 and/or the mobile electronic device, may be used to prompt the user of the seat, e.g. by a voice message or a signal, that the sitting position should be changed. A visual and/or audial feedback system is/are suitable to be utilized as the prompting system.

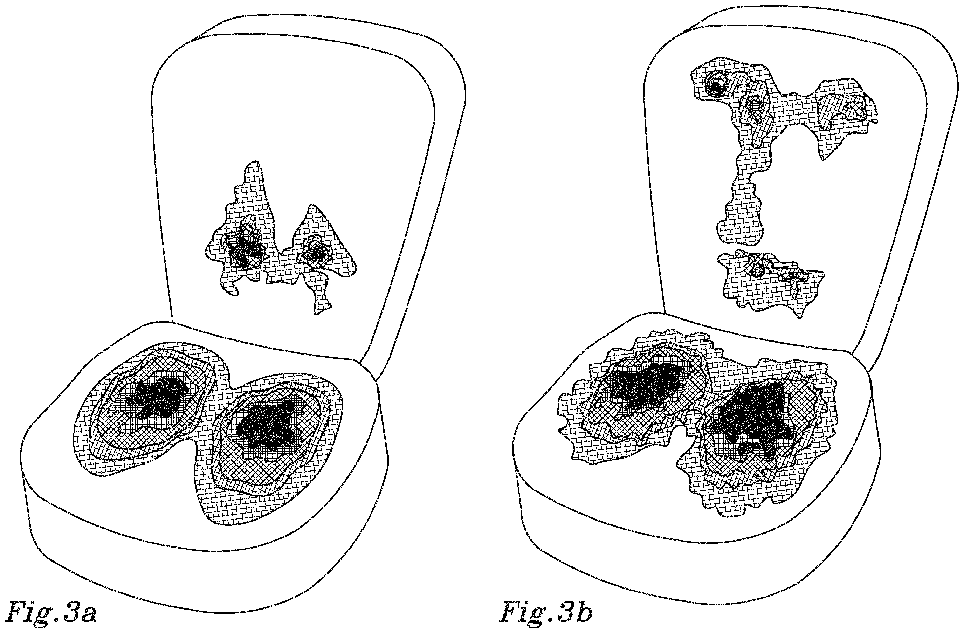

The visual feedback system may be used to display a pressure mapping, see infotainment system 17 in Figure 2 and Figures 3a and 3b, wherein the determined pressure distribution is represented by a pressure mapping in the form of a two-dimensional diagram wherein the local pressure is represented by different colours and/or colour intensities, illustrated as different patterns in Figures 3a and 3b. The illustrated pressure mappings of Figures 3a and 3b include both the squab and the backrest, but it would also be possible only determining pressure for the squab or the backrest. Further, for some seats, the squab and the backrest together form a single unit. When comparing a first determined pressure distribution illustrated in Figure 3a with a second determined pressure distribution illustrated in Figure 3b, it may be seen that the second determined pressure distribution represents a higher average pressure. Further the total area of pressure is larger, in particular on the backrest.

By utilizing the stored user identity data, it is possible for the sitting position adjustment system 1 to identify a user of the seat by the comparison unit 11 comparing the determined pressure distribution with the at least one of the one or more stored pressure distributions having an associated user identity data. The person is in that case identified by the pressure distribution he or she makes in the seat. Purely as an example, the area of the applied pressure and/or the relative local distribution of the pressure may be typical for the person. The pressure distribution of the individual can then be regarded as a bottom-print of the user, corresponding to identification made by finger-prints. As an option, data from a weight sensor provided in the seat may be used as well.

The sitting position adjustment system 1 may further comprise a massage system 23 adapted to provide massage to the user, e.g. by means of the micro-adjustment system 5, preferably the massage being based on the determined pressure distribution. The massage, e.g. its location and intensity, may be based on absolute values of the determined pressure distribution and/or based on the comparison of the determined pressure distribution with the at least one of the one or more stored pressure distributions. If the sitting position adjustment system is located in a driver's seat, the massage system 23 may be configured not to provide massage, when the vehicle is in motion and/or during a driving situation considered to be driver intense. Providing massage during a driving situation considered monotonous may however be suitable. The massage system 23 may be configured such that the user may start the massage, e.g. after having been asked if it is wanted. As an alternative, or a complement, the user may be able to preselect that it is acceptable that massage starts automatically based on the determined pressure distribution. The massage system may be comprised in the seat. If the user has been identified, e.g. in any of the ways described herein, the massage may be provided on a personalized basis. The massage may then be based on a combination of that person's historic data about pressure distributions with the presently determined pressure distribution.

Moreover, user identification by means of the determined pressure distribution may be performed independently of the micro-adjustment system 5 and/or the prompting system 7, i.e. it would be enough for user identification to have a system comprising the above-mentioned pressure distribution determination system 3, memory 9 and comparison unit 11.

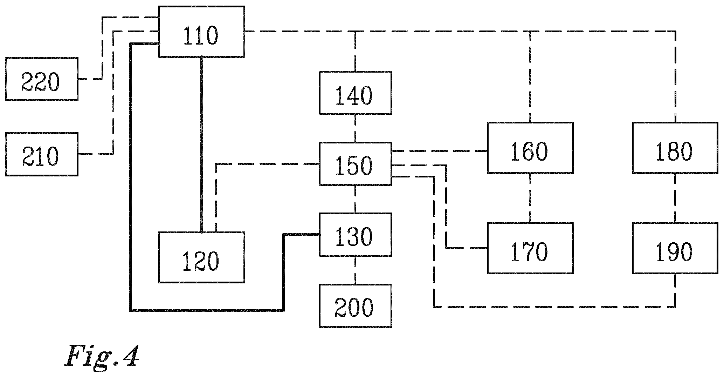

Figure 4 illustrates a method for adjusting a sitting position of a user of a seat according to the invention. The method may be performed by the sitting position adjustment system 1.

The method comprises 110: *determining a pressure distribution* of the user in the seat, 130: *making micro-adjustments* of a sitting surface of the seat based on the determined pressure distribution, and may further comprise 120: *prompting* the user to adjust sitting position based on the determined pressure distribution.

The step of 110: *determining a pressure distribution* may be performed by means of the pressure distribution determination system described herein. The step of 120: *prompting* the user to adjust sitting position distribution may be performed by means of the prompting system described herein. The step of 130: *making micro-adjustments* may be performed by the micro-adjustment system described herein.

The method may further comprise
140: *storing* one or more pressure distributions,
150: *comparing* by means of a comparison unit the determined pressure distribution with at least one of the one or more stored pressure distributions,
wherein the step of 120: *prompting* and/or 130: *making micro-adjustments* mentioned above is based on the comparison.

The one or more pressure distributions may be stored in a memory as described herein. The step of 150: *comparing* may comprise determining if the determined pressure distribution has been the same for a predetermined period of time and/or determining if the determined pressure distribution is related to an unsuitable sitting position. The sitting position may e.g. be unsuitable from an ergonomic point of view and/or from a safety point of view.

As described herein, the step of 120: *prompting* and/or 130: *making micro-adjustments* may, as an alternative or a complement, be based on absolute values of the determined pressure distribution.

The method may further comprise
160: *associating* user identity data with at least one of the one or more stored pressure distributions,
170: *identifying a user* of the seat, by means of the step of *comparing* comprising comparing the determined pressure distribution with at least one of the one or more stored pressure distributions having an associated user identity data.

The method may further comprise
180: *identifying a user* of the seat with a separate user identification system and/or with the method described herein, which utilizes the determined pressure distribution compared to the one or more stored pressure distributions having an associated user identity data,
190: *selecting a subset* of the one or more stored pressure distributions based on the identified user,
wherein the step of comparing comprises comparing the determined pressure distribution with the at least one of the subset of the one or more stored pressure distributions.

The step of 150: *comparing* may comprise determining if the determined pressure distribution has been the same for a predetermined period of time and/or determining if the determined pressure distribution is related to an unsuitable sitting position. The sitting position may e.g. be unsuitable from an ergonomic point of view and/or from a safety point of view.

The step of 130: *prompting* may comprise 200: *providing haptic, visual and*/*or audial feedback* to the user with a haptic, visual and/or audial feedback system, wherein the feedback is based on the determined pressure distribution. The feedback may be based on absolute values of the determined pressure distribution and/or based on the comparison of the determined pressure distribution with the at least one of the one or more stored pressure distributions.

The method may further comprise
210: *providing*, based on the determined pressure distribution one or more pre-stored *exercise suggestions* to the user by means of the visual and/or audial feedback system. The exercise suggestions may be suitable to be performed while the user sits in the seat or they may be performed after the user has left the seat. The exercise suggestions may be displayed by the visual feedback system and/or may be transmitted by the audial feedback system, e.g. as voice messages.

The method may further comprise
220: *providing massage* to the user by means of a massage system comprised in the seat by making micro-adjustments of the sitting surface of the seat, preferably the massage being based on the determined pressure distribution.

The massage may be based on absolute values of the determined pressure distribution and/or based on the comparison of the determined pressure distribution with the at least one of the one or more stored pressure distributions. The massage may be performed by means of the micro-adjustment system.

Corresponding to as for the system, as mentioned above, user identification by means of the determined pressure distribution may be performed independently of the step of *prompting* and/or *making micro-adjustments.* Such a method for user identification may then comprise the steps of:
110: *determining a pressure distribution* of the user in the seat,
140: *storing* one or more pressure distributions,
160: *associating* user identity data with at least one of the one or more stored pressure distributions,
170 *identifying a user* of the seat by *comparing* the determined pressure distribution with at least one of the one or more stored pressure distributions having an associated user identity data.

Further modifications of the invention within the scope of the appended claims are feasible. As such, the present invention should not be considered as limited by the embodiments and figures described herein. Rather, the full scope of the invention should be determined by the appended claims, with reference to the description and drawings.

## Claims

1. A sitting position adjustment system (1) for adjusting a sitting position of a user of a seat, said sitting position adjustment system (1) comprising
- a pressure distribution determination system (3) for determining a pressure distribution of said user in said seat,
**characterized in that**
said sitting position adjustment system (1) further comprises
- a micro-adjustment system (5) for making micro-adjustments of a sitting surface of said seat based on said determined pressure distribution, said micro-adjustment system (5) being adapted to operate in the millimetre range and/or the submillimetre range.

2. The sitting position adjustment system (1) according to claim 1 further comprising
- a prompting system (7) for prompting said user to adjust sitting position based on said determined pressure distribution

3. The sitting position adjustment system (1) according to claim 1 or 2 further comprising
- a memory (9) for storing one or more pressure distributions, said memory (9) comprising one or more stored pressure distributions,
- a comparison unit (11) for comparison of said determined pressure distribution with at least one of said one or more stored pressure distributions,
wherein said micro-adjustment system (5) is adapted to make micro-adjustments of said sitting surface of said seat based on said comparison and, if dependent on claim 2, said prompting system (7) is adapted to prompt said user based on said comparison.

4. The sitting position adjustment system (1) according to claim 3, wherein said memory (9) is adapted to in addition comprise user identity data associated with at least one of said one or more stored pressure distributions.

5. The sitting position adjustment system (1) according to any one of the preceding claims further comprising
- a separate user identification system (13a, 13b) adapted to identify a user of said seat.

6. The sitting position adjustment system (1) according to any one of the preceding claims further comprising
- a feedback system (15, 17) adapted to provide feedback to said user based on said determined pressure distribution.

7. The sitting position adjustment system (1) according to any one of the preceding claims further comprising
- a massage system (23) adapted to provide massage to said user, e.g. by means of said micro-adjustment system (5), preferably said massage being based on said determined pressure distribution.

8. A seat, e.g. a vehicle seat, comprising and/or being provided with a sitting position adjustment system (1) according to any one of the preceding claims.

9. A method for adjusting a sitting position of a user of a seat, said method comprising
- *determining a pressure distribution* of said user in said seat (110),
- *making micro-adjustments* of a sitting surface of said seat based on said determined pressure distribution (130), said micro-adjustments being in the millimetre range and/or the submillimetre range.

10. The method according to claim 9 further comprising
- *prompting* said user to adjust sitting position based on said determined pressure distribution (120).

11. The method according to claim 9 or 10 further comprising
- *storing* one or more pressure distributions (140),
- *comparing* (150) by means of a comparison unit (11) said determined pressure distribution with at least one of said one or more stored pressure distributions, wherein said step of *making micro-adjustments* (130) is based on said comparison, and, if dependent on claim 10, said step of *prompting* (120) is based on said comparison.

12. The method according to claim 11 further comprising
- *associating* user identity data with at least one of said one or more stored pressure distributions (160),
- *identifying* a *user* of said seat (170), by means of said step of *comparing* (150) comprising comparing said determined pressure distribution with at least one of said one or more stored pressure distributions having an associated user identity data.

13. The method according to claim 11 or 12 further comprising
- *identifying* a *user* of said seat (180) with a separate user identification system (13a, 13b) and/or with the method of claim 10,
- *selecting a subset* of said one or more stored pressure distributions based on said identified user (190),
wherein said step of *comparing* (150) comprises comparing said determined pressure distribution with said at least one of said subset of said one or more stored pressure distributions.

14. The method according to any one of claims 11-13, wherein said step of *comparing* (150) comprises determining if said determined pressure distribution has been the same for a predetermined period of time and/or determining if said determined pressure distribution is related to an unsuitable sitting position.

15. The method according to 10, or any one of claims 11-14 when dependent on claim 10, wherein said step of *prompting* (120) comprises *providing haptic*, *visual and*/*or audial feedback* to said user (200) with a haptic, visual and/or audial feedback system (15, 17), wherein said feedback is based on said determined pressure distribution.

16. The method according to any one of claims 9-15 further comprising
- *providing* based on said determined pressure distribution one or more pre-stored *exercise suggestions* to said user (210) by means of said visual and/or audial feedback system (17).

17. The method according to any one of claims 9-16 further comprising
- *providing massage* (220) to said user by means of a massage system (23) comprised in said seat by making micro-adjustments of said sitting surface of said seat, preferably said massage being based on said determined pressure distribution.

## Patentansprüche

1. Sitzpositionanpassungssystem (1) zum Anpassen einer Sitzposition eines Benutzers eines Sitzes, wobei das Sitzpositionanpassungssystem (1) Folgendes umfasst:
- ein Druckverteilungsfeststellungssystem (3) zum Feststellen einer Druckverteilung der Benutzers in dem Sitz,
**dadurch gekennzeichnet, dass**
das Sitzpositionanpassungssystem (1) ferner Folgendes umfasst:
- ein Mikroanpassungssystem (5) zum Vornehmen von Mikroeinstellungen einer Sitzfläche des Sitzes basierend auf der festgestellten Sitzdruckverteilung, wobei das Mikroanpassungssystem (5) dazu ausgelegt ist, im Millimeterbereich und/oder im Submillimeterbereich zu operieren.

2. Sitzpositionanpassungssystem (1) nach Anspruch 1, ferner umfassend:
- ein Aufforderungssystem (7), um den Benutzer aufzufordern, die Sitzposition auf der Grundlage der festgestellten Druckverteilung anzupassen.

3. Sitzpositionanpassungssystem (1) nach Anspruch 1 oder 2, ferner Folgendes umfassend:
- einen Speicher (9) zum Speichern einer oder mehrerer Druckverteilungen, wobei der Speicher (9) eine oder mehrere gespeicherte Druckverteilungen umfasst,
- eine Vergleichseinheit (11) zum Vergleichen der festgestellten Druckverteilung mit mindestens einer von der einen oder den mehreren gespeicherten Druckverteilungen,
wobei das Mikroanpassungssystem (5) dazu ausgelegt ist, Mikroanpassungen der Sitzfläche des Sitzes auf der Grundlage des Vergleichs vorzunehmen, und, wenn von Anspruch 2 abhängig, ist das Aufforderungssystem (7) dazu ausgelegt, den Benutzer auf der Grundlage des Vergleichs aufzufordern.

4. Sitzpositionanpassungssystem (1) nach Anspruch 3, wobei der Speicher (9) dazu ausgelegt ist, zusätzlich Benutzeridentitätsdaten im Zusammenhang mit mindestens einer von der einen oder den mehreren gespeicherten Druckverteilungen zu umfassen.

5. Sitzpositionanpassungssystem (1) nach einem der vorangehenden Ansprüche, ferner umfassend:
- ein separates Benutzeridentifikationssystem (13a, 13b), das dazu ausgelegt ist, einen Benutzer des Sitzes zu identifizieren.

6. Sitzpositionanpassungssystem (1) nach einem der vorangehenden Ansprüche, ferner umfassend:
- ein Rückmeldungssystem (15, 17), das dazu ausgelegt ist, auf der Grundlage der festgestellten Druckverteilung dem Benutzer eine Rückmeldung bereitzustellen.

7. Sitzpositionanpassungssystem (1) nach einem der vorangehenden Ansprüche, ferner umfassend:
- ein Massagesystem (23), das dazu ausgelegt ist, dem Benutzer Massage bereitzustellen, z. B. mittels des Mikroanpassungssystems (5), wobei die Massage vorzugsweise auf der festgestellten Druckverteilung basiert.

8. Sitz, z. B. ein Fahrzeugsitz, umfassend ein Sitzpositionanpassungssystem (1) nach einem der vorangehenden Ansprüche oder ausgestattet damit.

9. Verfahren zum Anpassen einer Sitzposition eines Benutzers eines Sitzes, wobei das Verfahren Folgendes umfasst:
- *Feststellen einer Druckverteilung* des Benutzers in dem Sitz (110),
- *Vornehmen von Mikroanpassungen* einer Sitzfläche des Sitzes basierend auf der festgestellten Druckverteilung (130), wobei die Mikroanpassungen im Millimeterbereich und/oder im Submillimeterbereich liegen.

10. Verfahren nach Anspruch 9, ferner umfassend:
- *Auffordern* des Benutzers, die Sitzposition auf der Grundlage der festgestellten Druckverteilung (120) anzupassen.

11. Verfahren nach Anspruch 9 oder 10, ferner umfassend:
- *Speichern* einer oder mehrerer Druckverteilungen (140),
- mittels einer Vergleichseinheit (11) *Vergleichen* (150) der festgestellten Druckverteilung mit mindestens einer von der einen oder den mehreren gespeicherten Druckverteilungen,
wobei der Schritt des *Vornehmens von Mikroanpassungen* (130) auf dem Vergleich basiert, und, wenn von Anspruch 10 abhängig, der Schritt des *Aufforderns* (120) auf dem Vergleich basiert.

12. Verfahren nach Anspruch 11, ferner umfassend:
- *Zuordnen* von Benutzeridentitätsdaten zu mindestens einer von der einen oder den mehreren gespeicherten Druckverteilungen (160),
- *Identifizieren eines Benutzers* des Sitzes (170) mittels des Schrittes des *Vergleichens* (150) der festgestellten Druckverteilung mit mindestens einer von der einen oder den mehreren gespeicherten Druckverteilungen, denen Benutzeridentitätsdaten zugeordnet sind.

13. Verfahren nach Anspruch 11 oder 12, ferner umfassend:
- *Identifizieren eines Benutzers* des Sitzes (180) mit einem separaten Benutzeridentifikationssystem (13a, 13b) und/oder mit dem Verfahren nach Anspruch 10,
- *Auswählen einer Teilmenge* der einen oder mehreren Druckverteilungen auf der Grundlage des identifizierten Benutzers (190),
wobei der Schritt des *Vergleichens* (150) ein Vergleichen der festgestellten Druckverteilung mit mindestens einer von der Teilmenge der einen oder mehreren gespeicherten Druckverteilungen umfasst.

14. Verfahren nach einem der Ansprüche 11-13, wobei der Schritt des *Vergleichens* (150) das Feststellen umfasst, ob die festgestellte Druckverteilung für einen vorbestimmten Zeitraum dieselbe war und/oder das Feststellen, ob die festgestellte Druckverteilung mit einer ungeeigneten Sitzposition zusammenhängt.

15. Verfahren nach Anspruch 10 oder einem der Ansprüche 11-14, wenn abhängig von Anspruch 10, wobei der Schritt des *Aufforderns* (120) ein *Bereitstellen einer haptischen*, *visuellen und*/*oder akustischen Rückmeldung* an den Benutzer (200) mit einem haptischen, visuellen und/oder akustischen Rückmeldungssystem (15, 17) umfasst, wobei die Rückmeldung auf der festgestellten Druckverteilung basiert.

16. Verfahren nach einem der Ansprüche 9-15, ferner umfassend:
- auf der Grundlage der festgestellten Druckverteilung *Bereitstellen* eines oder mehrerer vorgespeicherter *Übungsempfehlungen* an den Benutzer (210) mittels des visuellen und/oder akustischen Rückmeldungssystems (17).

17. Verfahren nach einem der Ansprüche 9-16, ferner umfassend:
- *Bereitstellen von Massage* (220) an den Benutzer mittels eines in dem Sitz enthaltenen Massagesystems (23) durch Vornehmen von Mikroeinstellungen der Sitzfläche des Sitzes, wobei die Massage vorzugsweise auf der festgestellten Druckverteilung basiert.

## Revendications

1. Système de réglage de position assise (1) destiné à régler une position assise de l'utilisateur d'un siège, ledit système de réglage de position assise (1) comprenant :
un système de détermination de répartition de pression (3) pour déterminer une répartition de pression dudit utilisateur dans ledit siège,
**caractérisé en ce que**
ledit système de réglage de position assise (1) comprend en outre
un système de micro réglage (5) pour effectuer des micro réglages d'une surface d'assise dudit siège sur la base de ladite répartition de pression déterminée, ledit système de micro réglage (5) étant conçu pour fonctionner dans la plage des millimètres et/ou dans la plage inférieure aux millimètres.

2. Système de réglage de position assise (1) selon la revendication 1, comprenant en outre
un système d'invite (7) pour inviter l'utilisateur à régler la position assise sur la base de ladite répartition de pression déterminée.

3. Système de réglage de position assise (1) selon la revendication 1 ou 2, comprenant en outre
une mémoire (9) pour stocker une ou plusieurs répartitions de pression, ladite mémoire (9) comprenant une ou plusieurs répartitions de pression stockées,
une unité de comparaison (11) pour comparer ladite répartition de pression déterminée à au moins l'une desdites une ou plusieurs répartitions de pression stockées,
dans lequel ledit système de micro réglage (5) est conçu pour effectuer des micro réglages de ladite surface d'assise dudit siège sur la base de ladite comparaison et, en cas de dépendance à la revendication 2, ledit système d'invite (7) est conçu pour inviter ledit utilisateur sur la base de ladite comparaison.

4. Système de réglage de position assise (1) selon la revendication 3, dans lequel ladite mémoire (9) est en outre conçue pour comprendre des données d'identité de l'utilisateur associées à au moins l'une desdites une ou plusieurs répartitions de pression stockées.

5. Système de réglage de position assise (1) selon l'une quelconque des revendications précédentes, comprenant en outre
un système séparé d'identification d'utilisateur (13a, 13b) conçu pour identifier un utilisateur dudit siège.

6. Système de réglage de position assise (1) selon l'une quelconque des revendications précédentes, comprenant en outre
un système de retour d'informations (15, 17) conçu pour fournir un retour d'informations audit utilisateur sur la base de ladite répartition de pression déterminée.

7. Système de réglage de position assise (1) selon l'une quelconque des revendications précédentes, comprenant en outre
un système de massage (23) conçu pour fournir un massage audit utilisateur, p. ex. au moyen dudit système de micro réglage (5), ledit massage étant de préférence basé sur ladite répartition de pression déterminée.

8. Siège, p. ex siège de véhicule, comprenant et/ou étant muni d'un système de réglage de position assise (1) selon l'une quelconque des revendications précédentes.

9. Procédé de réglage d'une position assise de l'utilisateur d'un siège, ledit procédé comprenant
la détermination d'une répartition de pression dudit utilisateur dans ledit siège (110),
l'exécution de micro réglages d'une surface d'assise dudit siège sur la base de ladite répartition de pression déterminée (130), lesdits micro réglages étant dans la plage des millimètres et/ou dans la plage inférieure aux millimètres.

10. Procédé selon la revendication 9, comprenant
l'invite dudit utilisateur à régler la position assise sur la base de ladite répartition de pression déterminée (120).

11. Procédé selon la revendication 9 ou 10, comprenant en outre
le stockage d'une ou plusieurs répartitions de pression (140),
la comparaison (150) au moyen d'une unité de comparaison (11) de ladite répartition de pression déterminée à au moins l'une desdites une ou plusieurs répartitions de pression stockées,
dans lequel ladite étape d'exécution de micro réglages (130) est basée sur ladite comparaison, et en cas de dépendance à la revendication 10, ladite étape d'invite (120) est basée sur ladite comparaison.

12. Procédé selon la revendication 11, comprenant en outre
l'association de données d'identité d'utilisateur à au moins l'une desdites une ou plusieurs répartitions de pression stockées (160),
l'identification d'un utilisateur dudit siège (170) au moyen de ladite étape de comparaison (150) comprenant la comparaison de ladite répartition de pression déterminée à au moins l'une desdites une ou plusieurs répartitions de pression stockées ayant des données associées d'identité d'utilisateur.

13. Procédé selon la revendication 11 ou 12, comprenant en outre
l'identification d'un utilisateur dudit siège (180) au moyen d'un système séparé d'identification d'utilisateur (13a, 13b) et/ou du procédé selon la revendication 10,
la sélection d'un sous-ensemble desdites une ou plusieurs répartitions de pression stockées sur la base dudit utilisateur identifié (190),
dans lequel ladite étape de comparaison (150) comprend la comparaison de ladite répartition de pression déterminée à ladite au moins une dudit sous-ensemble desdites une ou plusieurs répartitions de pression stockées.

14. Procédé selon l'une quelconque des revendications 11 à 13, dans lequel ladite étape de comparaison (150) comprend le fait de déterminer si ladite répartition de pression déterminée a été la même pendant une période temporelle prédéterminée et/ou le fait de déterminer si ladite répartition de pression déterminée est relative à une position assise inadaptée.

15. Procédé selon la revendication 10 ou l'une quelconque des revendications 11 à 14 lorsqu'elles dépendent de la revendication 10, dans lequel ladite étape d'invite (120) comprend la fourniture d'un retour d'informations haptique, visuel et/ou audio audit utilisateur (200) au moyen d'un système haptique, visuel et/ou audio (15, 17), dans lequel ledit retour d'informations est basé sur ladite répartition de pression déterminée.

16. Procédé selon l'une quelconque des revendications 9 à 15, comprenant en outre
la fourniture sur la base de ladite répartition de pression déterminée d'une ou plusieurs suggestions d'exercice préstockées audit utilisateur (210) au moyen dudit système de retour d'informations visuel et/ou audio (17).

17. Procédé selon l'une quelconque des revendications 9 à 16, comprenant en outre
la fourniture d'un massage (220) audit utilisateur au moyen d'un système de massage (23) compris dans ledit siège par l'exécution de micro réglages de ladite surface d'assise dudit siège, ledit massage étant de préférence basé sur ladite répartition de pression déterminée.
